# EUROPÄISCHE PATENTSCHRIFT

(11) **EP 0 491 288 B1**
(45) Veröffentlichungstag und Bekanntmachung des Hinweises auf die Patenterteilung: **12.04.1995**
(21) Anmeldenummer: 91121364.3
(22) Anmeldetag: 12.12.1991
(51) Int. Cl.: B01D 3/42

(54) **Verfahren zum optimalen Regeln der Stoffaustauschzone von Destillationskolonnen**
Method for the optimal control of the mass exchange zone of a distillation column
Procédé pour le contrôle optimum de la zone d'échange de masse d'une colonne de distillation

(30) Priorität: 15.12.1990 DE 4040185
(43) Veröffentlichungstag der Anmeldung: 24.06.1992
(73) Patentinhaber: HOECHST AKTIENGESELLSCHAFT, 65926 Frankfurt am Main (DE)
(72) Erfinder: Rathert, Hermann, Dr., W-6231 Schwalbach am Taunus (DE)

(56) Entgegenhaltungen:
- EP-A- 0 413 866
- US-A- 2 580 651
- US-A- 2 684 326
- US-A- 2 758 793
- US-A- 3 268 420
- US-A- 3 855 074
- US-A- 4 028 194
- ISA TRANSACTIONS, Bd. 23, Nr. 1, 1984, PITTSBURGH/US, Seiten 73-83; T.S.JOHNSON: "COMPUTERIZED CONTROL SCHEME DEVELOPMENT OF DISTILLATION COLUMNS USING MULTIPLE TEMPERATURE INPUTS"
- REGELUNGS-TECHNISCHE PRAXIS, Bd. 21, Nr. 5, Mai 1979, MUNCHEN/DE, Seiten 118-124; K.F.FRÜH: "ERFAHRUNGEN BEIM ENTWURF UND EINSATZ VON MEHRGRÖSSENREGELUNGEN AN REKTIFIKATIONS- UND REAKTIONSKOLONNEN"

## Beschreibung

Gegenstand der Erfindung ist ein Verfahren zum optimalen Regeln der Stoffaustauschzone einer Destillationskolonne mit Hilfe ihrer Kennfelder, die druck- und heizdampfabhängig sind.

Destillationskolonnen werden für bestimmte Mengenströme mit definierten Konzentrationen ausgelegt. Den Berechnungsunterlagen des Herstellers werden die Bedingungen entnommen, die eingehalten werden müssen, damit die geforderten Reinheiten der Kopf- und Sumpfprodukte erhalten werden. Da in der betrieblichen Praxis die geforderten Bedingungen wegen sich ständig ändernder Mengenströme, Stoffzusammensetzungen und auch der Stoffe selbst oft nicht eingehalten werden können, lassen sich Destillationskolonnen mit der herkömmlichen Regeltechnik, die auf fest vorgegebenen Sollwerten basiert, nicht ihren Auslegungsdaten entsprechend betreiben.

Hier will die Erfindung Abhilfe schaffen.

Die Erfindung löst die Aufgabe durch ein Verfahren, das dadurch gekennzeichnet ist, daß man
a) die Temperatur auf zwei unterschiedlichen Böden in der Stoffaustauschzone der Kolonne mißt,
b) die Meßwerte mit einer der Kennlinien der Kennfelder, die die Sollwerte für die Temperatur und den Abstand der Einbauorte für die Thermometer in der Kolonne darstellen, vergleicht und
c) die Abweichung zum Sollwert des Abstandes der Einbauorte der Thermometer für die Regelung der Stoffaustauschzone durch Verstellen der Dampfzufuhr und des Rücklaufes oder des Drucks benutzt.

Neben der Temperatur auf zwei unterschiedlichen Böden kann auch der Druck der Kolonne gemessen werden. Die Abweichung zum Sollwert des Abstandes der Einbauorte für die Thermometer kann auch für die Regelung der Stoffaustauschzone durch Verstellen der Dampfzufuhr, des Seitenabzugs und des Rücklaufs oder des Drucks benutzt werden.

Die Vorteile der Erfindung sind im wesentlichen darin zu sehen, daß die Dampfmenge, die Seitenabzugsmenge und das Rücklaufverhältnis an die sich ändernden Einlaufmengen mit schwankenden Stoffzusammensetzungen ständig angepaßt werden können. Hohe Sumpf- und Kopfreinheiten können bei optimalem Dampfverbrauch erhalten werden, d.h. die Stoffaustauschzone kann am richtigen Ort gehalten und die Stoffzusammensetzung im Einlauf erkannt werden. Letzteres hat Bedeutung für den Stoffumsatz vorgeschalteter Reaktoren.

Die Erfindung, die sich grundsätzlich für das optimale Regeln der Stoffaustauschzone von Destillationskolonnen eignet, soll nachstehend an einem speziellen Beispiel näher erläutert werden.

### Beispiel

In eine Destillationskolonne, die bei 11,53 bar betrieben wird und deren Kennfeld sowie die Kennlinie für 11,53 bar dem Diagramm (Figur) zu entnehmen ist, werden 160 kg/h eines Gemisches aus 35,1 % Tetrafluordichloräthan (F 114), 63,5 % Pentafluormonochloräthan (F 115) und 3400 ppm Tetrafluormonochloräthan (F 124) und 40 kg/h Dampf zugeführt. Gleichzeitig werden 590 kg/h Kopfprodukt aus F 115 zurückgeführt und 98 kg/h Kopfprodukt abgeführt. Auf dem 41. (2) und 38. (1) theoretischen Boden der Austauschzone der Kolonne sind Thermometer installiert, die Temperaturen von 78,1°C und 67,6°C messen. Nach der Kennlinie für den Betriebsdruck der Kolonne sollen die Temperaturen auf dem 41. (2) und 38. (1) theoretischen Boden aber 82,8°C und 70,21°C betragen. Die gemessene Temperatur ist also tiefer als die Solltemperatur. Bei einem Vergleich mit der Kennlinie scheinen sich die Thermometer auf den 40,28ten (4) Boden bzw. den 36,91ten (3) Boden verschoben zu haben. Der Dampfregler vergleicht den wahren Abstand der Thermometer mit ihrem scheinbaren Abstand und verstellt die Dampfmenge so, daß ihr wahrer Abstand wieder eingestellt wird. In diesem Fall wird die Dampfmenge erhöht bis ein Bodenabstand von drei Böden - also der Sollabstand - erreicht ist, was einer Isttemperatur von 78.2°C bzw. 68.1°C entspricht. Wegen der Trägheit der Kolonne kann es zweckmäßig sein, parallel zur Dampfregelung die Kennlinie aus dem Kennfeld der Kolonne auszuwählen, die dem Sollabstand der Thermometer - also drei Böden - entspricht. Da aber die Temperaturen auf diesen Böden der ausgewählten Kennlinie noch nicht mit den Solltemperaturen übereinstimmen, muß die Rücklaufmenge oder der Druck in der Kolonne geändert werden. Der Rücklaufregler vergleicht den wahren mit dem scheinbaren Einbauort eines der Thermometer und ändert bei Abweichung die Rücklaufmenge. Im vorliegenden Beispiel wird die Rücklaufmenge verkleinert, bis die Isttemperatur mit der Solltemperatur übereinstimmt. Die Kolonne ist auf optimale Arbeitsbedingungen eingestellt. Da sich in der Praxis die Einlaufmenge und/oder die Gemischzusammensetzung ständig ändert, werden ständig neue Dampf- und Rücklaufmengen eingestellt. Statt der Verstellung der Rücklaufmenge, kann auch der Druck der Kolonne verstellt werden. Rücklauf- und Druckverstellung können auch gleichzeitig erfolgen. Mit dem erfindungsgemäßen Verfahren wird mit den vorstehend angegebenen Arbeitspunkten eine optimale Trennleistung entsprechend den Auslegungsdaten der Kolonne erreicht. Die Analyse vom Sumpf ergibt 93,94 % F 114, 2,7 % F 115 (Nutzprodukt) und 0,85 % F 124; die des Kopfes 0 % F 114, 99,97 % F 115 (Nutzprodukt) und 160 ppm F 124.

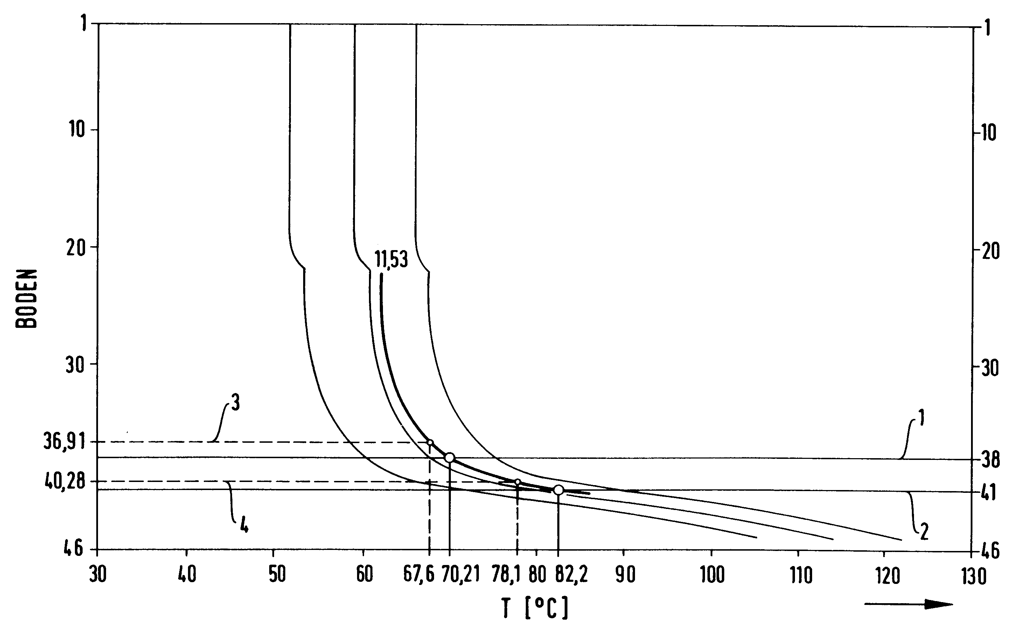

## Patentansprüche

1. Verfahren zum optimalen Regeln der Stoffaustauschzone einer Destillationskolonne mit Hilfe ihrer Kennfelder, die druck- und heizdampfabhängig sind, dadurch gekennzeichnet, daß man
a) die Temperatur auf zwei unterschiedlichen Böden in der Stoffaustauschzone der Kolonne mißt,
b) die Meßwerte mit einer der Kennlinien der Kennfelder, die die Sollwerte für die Temperatur und den Abstand der Einbauorte für die Thermometer in der Kolonne darstellen, vergleicht und
c) die Abweichung zum Sollwert des Abstandes der Einbauorte der Thermometer für die Regelung der Stoffaustauschzone durch Verstellen der Dampfzufuhr und des Rücklaufs oder des Drucks benutzt.

2. Verfahren nach Anspruch 1, dadurch gekennzeichnet, daß man neben der Temperatur auf zwei unterschiedlichen Böden den Druck der Kolonne mißt.

3. Verfahren nach Anspruch 1, dadurch gekennzeichnet, daß die Abweichung zum Sollwert des Abstandes der Einbauorte für die Thermometer für die Regelung der Stoffaustauschzone durch Verstellen der Dampfzufuhr, des Seitenabzugs und des Rücklaufs oder des Drucks benutzt.

4. Verfahren nach Anspruch 1, dadurch gekennzeichnet, daß man parallel zur Regelung der Stoffaustauschzone durch Verstellen der Dampfzufuhr die Kennlinie aus dem Kennfeld wählt,die dem Sollwert des Abstandes der Böden entspricht und den Rücklauf und/oder den Druck verstellt bis die Solltemperatur am Einbauort der Thermometer erreicht ist.

## Claims

1. A method for optimum control of the mass transfer zone in a distillation column by means of its characteristic areas which are dependent on pressure and heating steam, which comprises,
a) measuring the temperature on two different plates in the mass transfer zone of the column,
b) comparing the measured values with one of the characteristic curves of the characteristic areas, which represent the nominal values of the temperature and the distance between the points where the thermometers are installed in the column, and
c) utilizing the deviation from the nominal value of the distance between the points where the thermometers are installed for controlling the mass transfer zone by adjusting the steam feed and the reflux or the pressure.

2. The method as claimed in claim 1, wherein the column pressure is measured in addition to the temperature of two different plates.

3. The method as claimed in claim 1, wherein the deviation from the nominal value of the distance between the points where the thermometers are installed is utilized for controlling the mass transfer zone by adjusting the steam feed, the side take-off and the reflux or the pressure.

4. The method as claimed in claim 1, wherein in parallel to the control of the mass transfer zone by adjusting the steam feed, that characteristic curve is selected from the characteristic area which corresponds to the nominal value of the distance between the plates, and the reflux and/or the pressure is adjusted until the nominal temperature at the point where the thermometers are installed is reached.

## Revendications

1. Procédé pour le contrôle optimal de la zone d'échange de masse d'une colonne de distillation à l'aide de ses diagrammes caractéristiques qui sont fonction de la vapeur de chauffe et de la pression, caractérisé en ce que
a) on mesure la température au niveau de deux plateaux différents dans la zone d'échange de masse,
b) on compare les valeurs de mesure avec l'une des lignes caractéristiques des diagrammes caractéristiques, qui représentent les valeurs théoriques pour la température et la distance entre les emplacements pour les thermomètres dans la colonne, et
c) on utilise la différence avec la valeur théorique de la distance entre les emplacements des thermomètres, pour le contrôle de la zone d'échange de masse en ajustant l'alimentation en vapeur et le reflux ou la pression.

2. Procédé selon la revendication 1, caractérisé en ce que, outre la température, on mesure la pression de la colonne au niveau de deux plateaux différents.

3. Procédé selon la revendication 1, caractérisé en ce qu'on utilise la différence avec la valeur théorique de la distance entre les emplacements pour les thermomètres, pour le contrôle de la zone d'échange de masse, en ajustant l'alimentation en vapeur, l'extraction latérale, et le reflux ou la pression.

4. Procédé selon la revendication 1, caractérisé en ce que, parallèlement au contrôle de la zone d'échange de masse par ajustement de l'alimentation en vapeur, on choisit, à partir du diagramme caractéristique, la ligne caractéristique qui correspond à la valeur théorique de l'écartement entre les plateaux, et en ce qu'on ajuste le reflux et/ou la pression jusqu'à ce que la température théorique soit atteinte au point d'emplacement du thermomètre.
